Europäisches Patentamt

European Patent Office

Office européen des brevets

(19)

(11) **EP 1 677 273 A1**

(12) **EUROPEAN PATENT APPLICATION**
published in accordance with Art. 158(3) EPC

(43) Date of publication:
**05.07.2006 Bulletin 2006/27**

(51) Int Cl.:
***G09B 23/30*** (1968.09)

(21) Application number: **04792540.9**

(22) Date of filing: **18.10.2004**

(86) International application number:
**PCT/JP2004/015371**

(87) International publication number:
**WO 2005/038751 (28.04.2005 Gazette 2005/17)**

(84) Designated Contracting States:
**CH DE FR GB LI**

(30) Priority: **16.10.2003 JP 2003356843**
**10.03.2004 JP 2004068226**
**18.06.2004 JP 2004181751**
**14.09.2004 JP 2004266779**

(71) Applicant: **Nagoya Industrial Science Research Institute**
**Nagoya-shi,**
**Aichi 460-0008 (JP)**

(72) Inventor: **IKEDA, Seiichi**
**Tsuyama-shi, Okayama 708-1125 (JP)**

(74) Representative: **Müller Fottner Steinecke**
**Rechtsanwälte Patentanwälte,**
**Postfach 31 01 40**
**80102 München (DE)**

(54) **THREE-DIMENSIONAL MODEL**

(57)　A three-dimensional model capable of replicating dynamic characteristics of a body cavity portion such as a blood vessel is proposed. A membranous model having a cavity replicating a body cavity such as a blood vessel, which is formed based on tomogram data of a subject, therein is embedded in a base material having similar physical properties to those of a living body tissue. For the base material, a material such as a silicon gel having flexibility and elasticity is employed.

Fig. 7

**Description**

TECHNICAL FIELD

The present invention relates to a three-dimensional model. More particularly, it relates to a three-dimensional model replicating a body cavity such as a blood vessel of a subject.

BACKGROUND ART

The present inventors have proposed a block-shaped three-dimensional model replicating a body cavity such as a blood vessel and the like of a subject (see non-patent document 1). This three-dimensional model is obtained by rapid prototyping a body cavity model such as a blood and the like (not essential) vessel based on tomogram data of a subject, surrounding the circumference of the body cavity model by a molding material of the three-dimensional model, hardening the three-dimensional model molding material and then removing the body cavity model.

Furthermore, the present inventors have proposed a membranous three-dimensional model (see, non-patent document 2).

Furthermore, see the patent documents 1 to 5 as documents relating the present invention.

   Patent document 1: Japanese Patent Unexamined Publication No. 2003-11237
   Patent document 2: Japanese Patent Unexamined Publication No. H11-73096
   Patent document 3: WO 03/096309 Al
   Patent document 4: Japanese Patent Unexamined Publication No. H10-33253
   Patent document 5: Japanese Patent Unexamined Publication No. H3-111726
   Non-patent document 1: "Medical model for trial operation, which replicates the cavity of the cerebral blood vessel" (Proceeding of the 20th Robot Academic Study, 2002)
   Non-patent document 2: "Study on operation simulator based on living body information subjecting to an operation of the neuroendovascular Surgery." (Lecture Proceeding of robotics and mechatronics, 2003)

PROBLEMS TO BE SOLVED BY THE INVENTION

According to each of the above-mentioned three-dimensional models, since complicated and delicate three-dimensional shapes of a body cavity such as a cerebral blood vessel can be replicated exactly, it is suitable for identification of affected cites and for a simulation of the insertion of a catheter. However, in the block-shaped three-dimensional model, since a membranous structure of the blood vessel and a structure of a peripheral region of the blood vessel are not individually replicated, the shape of the blood vessel inside the model is restricted, and dynamic deformation of the blood vessels as observed at the time of an operation cannot be expressed with respect to the simulation of the insertion of medical instrument or fluid.

Furthermore, since a membranous three-dimensional model does not maintain the shape sufficiently, it is inconvenient to handle the membranous three-dimensional model.

METHOD TO SOLVE THE PROBLEMS

According to the first aspect, the present invention was made to solve the above-mentioned problems and the configuration thereof relates to a three-dimensional model, which includes:

   a membranous model replicating a body cavity such as a blood vessel and the like (not essential) inside thereof; and
   a translucent base material surrounding the membranous model and having elasticity and adhesiveness with respect to the membranous model.

ADVANTAGES OF THE INVENTION

According to the thus configured three-dimensional model, a membranous structure of the blood vessel of the living body and a structure of soft tissue around the blood vessel including physical properties can be individually replicated. Thus, a state in which a model of a membranous structure such as a blood vessel, and the like, having flexibility is embedded in a base material having elasticity of the surrounding tissues of the blood vessels is obtained. Consequently, at the time of simulation of the insertion of medical instrument or fluid, a blood vessel model having a membranous structure inside the three-dimensional model can change its shape with flexibility in the base material similar to the blood vessel in the living body, and so the blood vessel model is suitable for replicating the shape-changing property of the blood vessel of the living body.

BEST MODE FOR CARRYING OUT THE INVENTION

Hereinafter, each element of the present invention will be explained in detail.

(Membranous Model)

A membranous model is formed as follows.

A subject may be entire or a part of a human body, but an animal or a plant may be a target of tomography. Furthermore, it does not mean that dead bodies are excluded.

The tomogram data refer to basic data in carrying out the rapid prototyping. In general, three-dimensional shape data are constructed from tomographic data obtained by an X-ray CT scanner, an MRI imaging device, an ultrasonic device, and the like, and the three-dimensional shape data are resolved into two-dimensional data to obtain tomogram data.

Hereinafter, one example of generating tomogram data will be explained.

Herein, a case where a plurality of two-dimensional images taken in equal intervals while moving in parallel to the body axis direction are used as input data (tomographic data) is explained, however, three-dimensional shape data of cavities can be also obtained by carrying out the same processing even in a case where two-dimensional images or three-dimensional images obtained by other imaging methods are used as input images. Firstly, each of the input two-dimensional images is exactly laminated based on the image-taking intervals at the time of tomography. Then, on each two-dimensional image, by specifying threshold values as to image intensity values, only cavity regions targeting the body cavity model are extracted from each two-dimensional image, meanwhile other regions are removed from the laminated two-dimensional images. Thus, three-dimensional shapes of portions corresponding to cavity regions are provided as a shape in which two-dimensional images are laminated. The contours of these two-dimensional images are interpolated three-dimensionally to be reconstructed a three-dimensional curved surface. Thereby, three-dimensional shape data of the targeted cavities are generated. Note here that in this case, by specifying the threshold value as to the intensity n value, firstly the regions of cavities are extracted from the input image. However, besides this method, by specifying the specific intensity value giving the surfaces of the cavities, the surfaces of the cavities are extracted from the input image and interpolated three-dimensionally, whereby it is possible to generate three-dimensional curved surface directly. Furthermore, after extracting the regions by specifying the threshold value (or extracting the surfaces by specifying the specific intensity value), input images may be laminated. Furthermore, generation of a three-dimensional curved surface may be carried out by polygon approximation.

Note here that the three-dimensional shape data may be modified or altered during or after generation of the three-dimensional shape data. Examples of shape modification or alteration may include adding any structures that do not exist in tomographic data, adding a supporting structure called a support, removing a part of the structures in the tomographic data, or altering shapes of cavities, or the like. Thereby, it is possible to modify or change the shapes of cavities formed inside the three-dimensional model freely. Furthermore, it is also possible to provide a non-rapid prototyped region inside of the cavities. As mentioned below, in a case of producing a body cavity model in which the inside presents a hollow structure and a non-rapid prototyped region is provided, three-dimensional shape data in which such a non-rapid prototyped region is provided in the cavities is generated. Note here that such processing may be carried out by a rapid prototyping system or software that corresponds to the rapid prototyping system.

Next, the generated three-dimensional shape data of cavities are converted into a format that corresponds to the rapid prototyping system to be used for laminate shaping of the body cavity model if necessary, and sent to the rapid prototyping system or the software that corresponds to the rapid prototyping system to be used.

In the rapid prototyping system (or the software that corresponds to the rapid prototyping system), at the same time of setting various kinds of items such as arrangement or laminating direction of the body cavity model at the time of rapid prototyping, for the purpose of maintaining the shape during the rapid prototyping, supports (supporting structures) are added to portions that need supports (it is not necessary to add them unless necessary). Finally, by slicing the thus obtained shaped data based on the shaped thickness at the time of rapid prototyping, sliced data (tomogram data) directly used for rapid prototyping are generated. Note here that on the contrary to the above-mentioned procedure, supports may be added after generating slice data. Furthermore, when sliced data are automatically generated by a rapid prototyping system to be used (or software that corresponds to the rapid prototyping system), this procedure may be omitted. However, also in this case, setting of the thickness of rapid prototyping may be carried out. The same is true to the addition of supports, and when the support is automatically generated by the rapid prototyping system (or software that corresponds to the rapid prototyping system), the sliced data need not to be generated manually (may be generated manually).

In the above-mentioned examples, three-dimensional shape data are constructed from tomographic data.

However, also in a case where three-dimensional shape data are given as data from the first, by resolving the three-dimensional shape data into two-dimensional data and thus tomogram data to be used in the following rapid prototyping step may be obtained.

The present invention targets the body cavity such as blood vessels and the like (not essential). The body cavity herein refers to body cavities existing in various organs (skeletons, muscles, circulatory organs, respiratory organs, digestive organs, urogenital organs, endocrine organs, nerves, sense organs, etc.), as well as body cavities configured by geometry of various organs or body walls. Therefore, cavity of organs such as heart cavity, gastric cavity, intestinal cavity, uterine cavity, blood vessel lumen, urinary tract lumen, etc. and oral cavity, nasal cavity, fauces, middle ear cavity, body cavity, articular cavity, pericardial cavity, etc. are included in "body cavity."

From the above-mentioned tomogram data, the above-mentioned body cavity will be formed.

The forming method is not particularly limited, but rapid prototyping is preferable. Rapid prototyping herein denotes obtaining a predetermined shape by forming a thin layer based on tomogram data and repeating it sequentially. That is to say, based on the tomogram data of a subject, a cavity region of the subject is extracted and a body cavity model corresponding to the cavity region is rapid prototyped.

The rapid prototyped body cavity model must be removed in the following process. In order to facilitate removing, it is preferable that materials used for rapid prototyped are materials with a low melting point or materials that easily dissolve in a solvent. As such materials, thermoplastic (original sentence is wrong) resin with a low melting point, or wax, and the like may be used. In addition, stereolighography resin generally used in a so-called stereolighography method (included in rapid prototyping) can be used if easily decomposed.

The body cavity model can be made thin, in which the inside thereof has a hollow structure as long as it has a strength that can be resistant to an external force such as pressure added from the outside when it is surrounded by the three-dimensional model molding material in following process. Thus, it is possible not only to reduce time used for rapid prototyping and the cost accompanied with shaping but also to simplify the elution of the body cavity model in the later elution step.

Examples of specific rapid prototyping methods include a selective laser sintering method, an ink-jet method, a fused deposition extrusion method, etc.

Note here that to the body cavity model produced by rapid prototyping, after laminate shaping, various workings (removing working and addition working) such as surface polishing or addition of surface coating can be added, whereby it is possible to modify or change the shape of the body cavity model. When a support necessary to be removed after rapid prototyping is added support is removed, as a part of such workings.

Coating the surface of the body cavity model with other materials makes it possible to prevent a part or entire components of the body cavity model material from diffusing into the three-dimensional model molding materials. In addition to the above, also by physically treating (thermal treatment, high frequency treatment, etc.) or chemically treating the surface of the body cavity model, such diffusion can be prevented.

It is preferable that by surface treating the body cavity model, the level difference on the surface is smoothed. This makes the surface of the lumen of the three-dimensional (original sentence is wrong) membranous model to be smooth and can replicate inner surface of the body cavity such as a blood vessel more realistically. Examples of the surface treating methods include bringing the surface of the body cavity model with a solvent, melting the surface by heating, coating, and the combination thereof.

A part or entire part of the body cavity model is surrounded by a membranous model molding material thinly and hardened by polymerization or curing, and the like. By removing the body cavity model, a membranous model is formed.

The membranous model molding materials are appropriately selected in accordance with the application of use of the model. For example, besides elastomer such as silicone rubber (silicone elastomer) and thermosetting polyurethane elastomer, and the like, thermosetting resin such as silicone resin, epoxy resin, polyurethane, unsaturated polyester, phenol resin, urea resin, and the like, and thermoplastic resin such as polymethyl methacrylate and the like (not essential) can be used alone or in combination thereof. These materials are laminated thinly on the surface of the body cavity model by the method of coating, spraying, dipping, or the like, and then hardened or cured by the well-known method.

When the target of the membranous model model is a cerebral blood vessel, it is preferable that materials have high transparency, and elasticity and flexibility similar to those of living tissues. An example of such materials includes silicone rubber. Furthermore, since silicon rubber has a contact property similar to that of the living tissue, it is suitable for insertion of a medical instrument such as a catheter and carrying out an operation. Urethane resin and urethane elastomer can be also suitably used.

The membranous model molding materials may be formed of plural layers. The thickness thereof may be determined arbitrarily.

(Base material)

A base material is formed of a translucent material, thus enabling observation of deformation of a membranous model.

The base material is allowed to have elasticity. Preferably, the base material is low-elastic material having elastic modulus of 2.0 kPa to 100 kPa. More preferably, the base material has sufficient elongation. Thus, even if the membranous model is largely deformed, a base material is not peeled off from the membranous model. It is preferable that when the base material is stretched while adhesiveness with respect to the membranous model is secured, the base material shows 2 to 15 times elongation rate as the elongation rate of 1 when no load applied. Herein, the elongation rate denotes a maximum deformation amount in which the base material can return to the original state. Furthermore, it is preferable that the speed at which the base material returns to the original state when load is removed from the base material, which was deformed while applying load, is relatively gentle. For example, loss factor tand (at 1 Hz) as a viscoelastic parameter can be 0.2 to 2.0.

Thus, the base material has the property that is same or near property as the tissues existing around blood vessels and the like and the membranous model is deformed in the environment that is similar to the actual environment. That is to say, the feeling of insertion of a catheter and the like can be realized more realistically.

The base material is allowed to have adhesiveness with respect to the membranous model. Thus, even if the membranous model is deformed when a catheter, and the like, is inserted into the membranous model, no dislocation occurs between the base material and the membranous model. When the dislocation occurs therebetween, since stress applied to the membranous model varies, indisposition feeling may occur when a catheter is inserted when, for example, an insertion simulation of a catheter is carried out.

It is preferable that when the membranous model is a model of the cerebral blood vessels, the adhesiveness (adhesive strength) between the base material and the membranous model is in the range of 1 kPa to 20 kPa.

As such base materials, in Examples, a silicone gel and a glycerine gel are used, but the material is not particularly limited to them. Note here that liquid with high viscosity can be used as a base material as long as the casing can secure the air-tightness. This is particularly suitable as a base material for a membranous model replicating blood vessels surrounded by living tissues without having elasticity. By mixing these plural kinds of fluids and further mixing an adhesive agent thereto, a suitable base material can be prepared.

When gel is used as a material of the base material, by using plural materials with different physical property, the base material can be approached to the living tissues.

In order to observe the dynamic behavior of the membranous model, the base material is preferably translucent. In order to clarify the boundary between a membranous model and a base material, at least one of the membranous model and the base material can be colored. Furthermore, in order to observe the dynamic behavior of the membranous model more exactly, it is preferable that the refractive index of the material of the membranous model is substantially the same as that of materials of the base material.

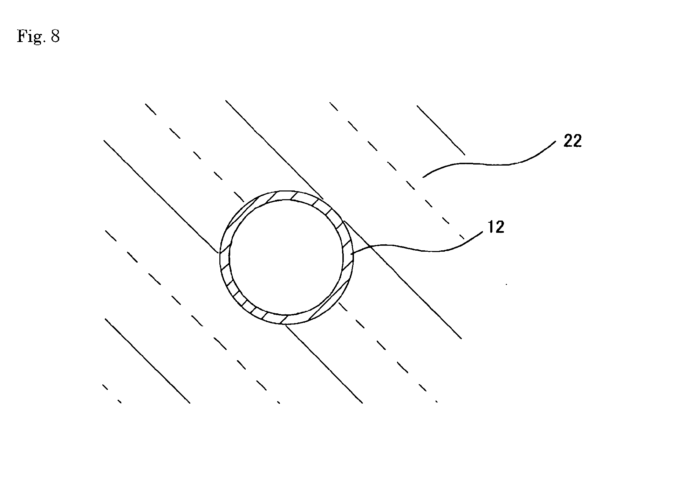

The entire part of the membranous model is not necessarily embedded in the base material. That is to say, a part of the membranous model may be located in a gap (see Fig. 8). Furthermore, a part of the membranous model may be located in a solid base material (having a non-similar physical property that is not similar to the living body) or in fluid.

(Casing)

Casing accommodates a base material and may have any shapes. Entire or a part of the casing is formed of a translucent material so that the dynamic behavior of the membranous model can be observed. Such a casing can be formed of a translucent synthetic resin (an acrylic plate, and the like) and a glass plate.

The casing is provided with a hole communicating to a cavity of a membranous model. A catheter can be inserted from this hole.

It is preferable that an entire three-dimensional model is translucent. From the viewpoint of observing the state in which a catheter is inserted, at least the inside of the membranous model may be recognized.

A sufficient distance is provided between the casing and the membranous model. Thus, a sufficient margin (thickness) is secured with respect to a base material having elasticity. When an external force is applied to a membranous model by the insertion of a catheter and the like, the membranous model can change its shape freely based on the external force. Note here that this margin can be selected arbitrarily in accordance with the subject of the three-dimensional model, application of use, and the like, however, for example, it is preferable that the margin is not less than 10 to 100 times as the film thickness of the membranous model.

(Manufacturing Method of Three-dimensional Model)

A core that is a body cavity model covered with a membranous model is set in a casing and a base material is infused in the casing and gelled. Thereafter, when a body cavity model is removed, a membranous model remains in the base material.

Alternatively, prior to the infusion of the base material, a body cavity model is removed and a membranous model is obtained. Thereafter, the membranous model may be set in the casing and then a base material is infused in the casing and gelled. In addition, in this case, a state in which the membranous model is embedded in the base material can be realized.

A method of removing the body cavity model may be appropriately selected in accordance with the shaping material of the body cavity model. It is not particularly limited as long as the method does not affect other materials of a three-dimensional model. As the method of removing the body cavity model, (a) a heat melting method of melting by heating; (b) a solvent melting method of melting by a solvent; and (c) a hybrid method combining melting by heating and melting by a solvent, and the like can be employed. By these methods, the body cavity model is removed by selectively fluidizing and eluting out the body cavity model to the outside of the three-dimensional model.

(Removing diffusion process)

A part of the component of materials of the body cavity model diffuses to the inside of the membranous model. This diffusion may cause fogging in the membranous model to lower the recognition property. In order to remove this fogging, it is preferable that the sample is heated again after the body cavity model is removed. This heating may be carried out in the middle of removing the body cavity model.

This three-dimensional model may be also formed by the following method.

Body cavity model as a core is embedded in a gel-like base material and then the body cavity model is removed. Thus, a cavity replicating the body cavity is formed in the base material. Thereafter, a forming material of the membranous model is attached to the peripheral wall of the cavity and then hardened by polymerization or curing, and the like. The formation material of the membranous model is poured into the cavity in the base material or by dipping the base material into the formation material of the membranous model, the formation material of the membranous model can be attached to the peripheral wall of the body cavity of the base material.

Furthermore, instead of attaching the forming material of the membranous model to the peripheral wall of the cavity, the peripheral wall of the cavity can be treated to have a hydrophilic property. Thus, when water or an aqueous solution is infused in the cavity of the three-dimensional model, water membrane is formed on the peripheral wall and insertion resistance of a catheter is reduced. That is to say, this water membrane corresponds to the membranous model.

In the case where the peripheral wall of the cavity is treated to have a hydrophobic property (lipophilic property), similarly, when oil is infused in the cavity, oil membrane is formed on the peripheral wall and insertion resistance of a catheter is reduced. That is to say, this oil membrane corresponds to the membranous model.

The peripheral wall of the cavity can be made to be hydrophilic or hydrophobic by the well-known method. For example, when silicon gel is used as a base material, by forming a film having a polar group such as a surfactant on the peripheral wall, the peripheral wall of the cavity can be made to be hydrophilic. Similarly, by forming an oil film such as oil, wax, or the like on the peripheral wall of the cavity, the peripheral wall of the cavity can be made to be hydrophobic.

The present inventors have found that internal stress of the membranous model can be observed by the photoelastic effect. That is to say, according to a three-dimensional model of another aspect of the present invention, in the above-mentioned three-dimensional model according to the first aspect, the membranous model is formed of a translucent material; the internal stress is not substantially generated in the thickness direction and the first internal stress is generated in the direction along the surface when an external force is applied to this; the base material is (not needed) formed of a material that does not substantially produce internal stress, and the three-dimensional model is used for observing the photoelastic effect.

According to the thus configured three-dimensional model, even when the membranous model has a three-dimensional shape, a photoelastic effect is caused exclusively by the first internal stress (stress in the direction along the surface of the peripheral wall of the membranous model) and the stress in the peripheral wall can be identified from the observed photoelastic effect (wavelength of light).

Such a stress observation system is effective in observing the physical property of the peripheral region of the cavity when the subject to be observed is a membranous model (a translucent model having cavity replicating the body cavity). That is to say, in the insertion simulation of a catheter or liquid, when stress is applied to the peripheral wall of the membranous model, the photoelastic effect is generated and the state of stress can be observed. Thus, the effect on the living tissue when a catheter or liquid is inserted into the body cavity such as blood vessels and the like (not essential) can be simulated.

In the above-mention, the peripheral wall is allowed to be a thin film of an elastic material and not restricted in the thickness direction when the external force is applied to this and only the compulsory displacement is allowed to occur in the direction along the surface. Thus, the stress generated on the peripheral wall is only the first internal stress and stress to the membranous peripheral wall can be identified from the photoelastic effect. Needless to say, in order to obtain the photoelastic effect, the peripheral wall has a translucent property.

The thickness of the peripheral wall is not particularly limited as long as the above-mentioned property can be maintained. However, according to the investigation of the present inventors, the thickness is preferably in a range of 0.1 to 5.0 mm, and more preferably in a range of 0.1 to 1.0 mm.

Furthermore, in order not to produce stress in the thickness direction of the peripheral wall, the peripheral wall is allowed to be free from physical restriction from the thickness direction. Specifically, the outside of the peripheral wall is brought into contact with a easily deformable base material such as gel and liquid (water, etc.) directly or indirectly via space, and when the peripheral wall is deformed in the thickness direction, the substantial resistance is not applied from the base material. In order not to give physical resistance to the peripheral wall, the base material is required to have a predetermined margin (thickness). Since this base material is deformed easily, in order to secure the predetermined margin, the periphery is surrounded by a casing. Furthermore, it is preferable that between the formation material of the peripheral wall and the formation material of the base material is highly adhesive. It is because when slip occurs therebetween, frictional resistance occurs and irregular internal resistance may occur. An example of such a formation material for the peripheral wall can include urethane resin or a urethane elastomer, and an example of the formation material for the base material can include a silicone gel.

Furthermore, it is not preferable that the photoelastic effect is generated from the base material because it becomes a noise of the photoelastic effect on the peripheral wall. Therefore, it is preferable that base material is a material such as gel or liquid (water, and the like) that does not substantially produce an internal stress.

Note here that inside the peripheral wall, that is, in a hollow portion, arbitrary things can be inserted in observing a photoelastic effect. For example, in the case of a membranous model, a catheter or liquid can be inserted.

The peripheral wall of the hollow portion is preferably formed to have an annular cross section having a substantially the same thickness. Thus, it is possible to obtain the same a photoelastic effect (wavelength of light) even when the peripheral wall is observed from any directions. Furthermore, in the peripheral wall, since the width of the material relating to the first internal stress is constant, the stress can be identified easily.

For observing the state of stress of the membranous model by the photoelasticity, at least a site that is necessary to observe the state of stress in a membranous model is formed of an isotropic material. The membranous model is allowed to have a translucent property.

As the materials having photoelasticity, besides elastomer such as silicone rubber (silicone elastomer), an elastomer such as a thermosetting polyurethane elastomer, and the like, thermosetting resin such as silicone resin, epoxy resin, polyurethane, unsaturated polyester, phenol resin, urea resin, and the like, thermoplastic resin such as poly methyl methacrylate and the like (not essential) can be used singly or in combination of the plurality of them.

In order to observe the state of stress in the peripheral wall as a photoelastic effect when a catheter or liquid is inserted into the cavity of the membranous model, at least the peripheral wall is necessarily formed of an elastically changeable material. Needless to say, the membranous model can be formed of an elastically deformable (not essential) material.

As a forming material of such a membranous model, a material whose shape is changed easily in accordance with the insertion of a catheter, and the like (that is to say, elastic modulus is small) and from which the change of a large a photoelastic effect can be observed (that is, modulus of photoelasticity is large) is preferable. Such a material can include a polyurethane elastomer. Furthermore, a gelling agent of polysaccharide such as gelatin (vegetable gelatin), vegetable gelatin, carrageenan, Locust bean gum, and the like, can be employed.

The base material is formed of a material that does not produce an internal stress. In order to replicate the living body tissue, appropriate elasticity and adhesiveness with respect to a membranous model are required.

The most preferable combination of the membranous model and the base material employs a membranous model formed of a polyurethane elastomer and a base material formed of a silicone gel.

(A photoelastic effect)

"A photoelastic effect" means that when internal stress is generated in translucent material, temporary birefringence occurs so as to make difference in the refractive index between the direction of maximum principal stress and the direction of minimum principal stress, so that incident light progresses in a state in which it is divided into two plane polarized lights. The phase difference in the two waves makes interference fringe to be generated. By observing this interference fringe, it is possible to know the state of the internal stress of the translucent material.

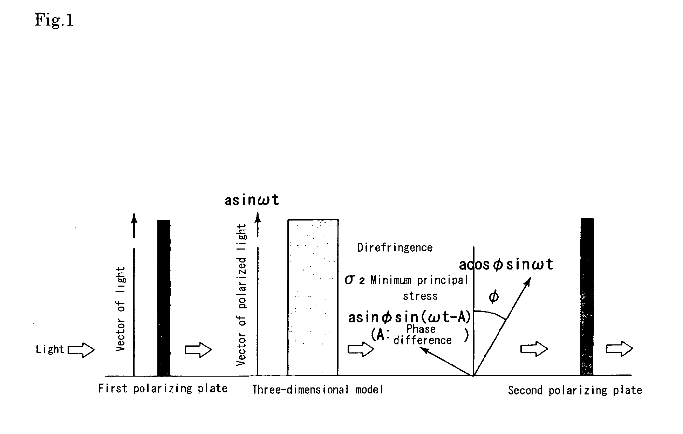

In order to produce this a photoelastic effect, as shown in Fig. 1, light from a light source is allowed to pass through a first polarizing plate (polarizing filter) to be polarized and this plane polarized light is allowed to pass through a three-dimensional model. When the internal stress is generated in the three-dimensional model, the birefringence is generated in accordance with the strength of the internal stress, and the maximum principal stress ($a\cos f \sin \omega t$) and the minimum principal stress ($a\cos f \sin((\omega t-A))$) are generated. Since these lights are different in speed, phase difference occurs. When these lights are observed through a second polarizing plate (polarizing filter), interference fringe appears.

Note here that the polarization direction of the second polarizing plate is substantially orthogonal to the polarization direction of the first polarizing plate.

Examples of the method of observing the photoelastic effect generated in light passing through a three-dimensional model that is intervened between a pair of polarizing plates include an orthogonal Nicol method, a parallel Nicol method and a sensitive color method, and the like. Furthermore, as a method of detecting a photoelastic effect, by intervening a 1/4 polarizing plate between the polarizing plate and the three-dimensional model, a circular polarizing method and a Senarmont method and the like are known.

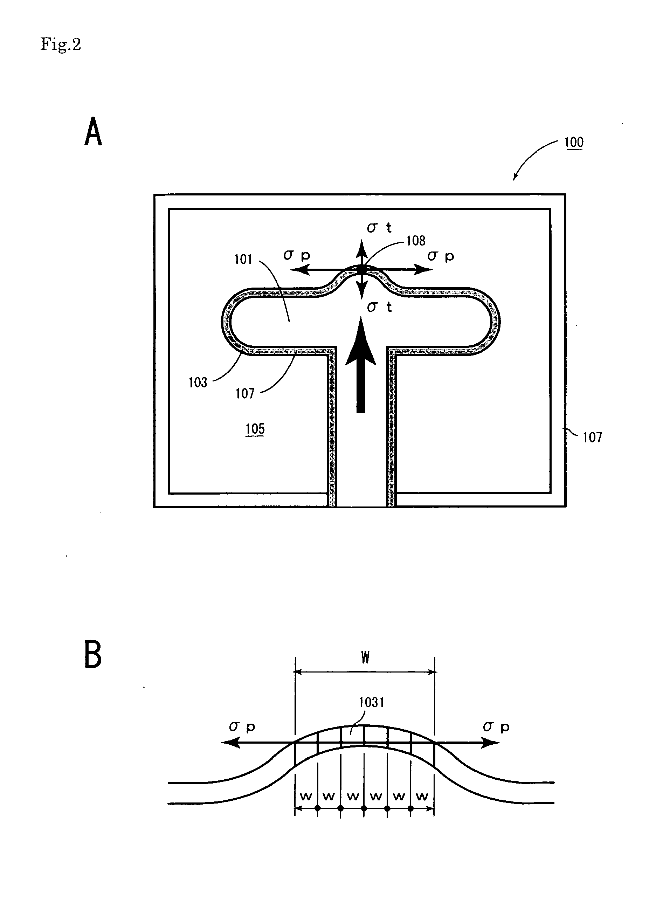

In the present invention, as shown in Fig. 2B, a subject 100 to be observed has a hollow portion 101 and a peripheral region 103 of the hollow portion 101 is formed of an elastic material having a photoelastic effect thinly (film thickness: 0.1 to 5.0 mm). The peripheral region 103 is surrounded by a translucent base material 105 such as a gel. The base material 105 is easily deformable (not essential) and does not substantially exhibit the photoelastic effect. Furthermore, by allowing the base material 105 to secure a sufficient thickness (margin), it is not resistant to the changing of shape of the peripheral region 103. The thickness of such a base material 105 is arbitrarily selected in accordance with the material. However, it is preferable that the thickness is not less than 10 times more and preferably not less than 100 times more than that of the peripheral region 103. Since the base material 105 having such a film thickness lose its shape easily, it is preferably covered with a translucent case 107. The shape of the case 107 is not particularly limited.

In the subject 100 to be observed shown in Fig. 2B, when external force (corresponding to a catheter) is applied as shown by an arrow, the peripheral region 103 is deformed. At this time, to the deformed portion, internal stress $\sigma 3$ in the thickness direction of the peripheral region 103 is hardly applied. This is because substantially no repulsion force is applied from the base material 105 to the external force. Therefore, to the deformed portion, substantially only the internal stress $\sigma p$ (first internal stress) in the direction along the surface of the peripheral region 103 occurs.

By allowing the subject 100 to be observed to transmit polarized light, the photoelastic effect caused by the first internal stress $\sigma p$ is generated and the light with wavelength in accordance with the first internal stress $\sigma p$ is observed.

The present inventors have investigated earnestly on a method for identifying the first internal stress $\sigma p$ by the use of the wavelength generated in the incident light by the photoelastic effect, in other words, by the use of the observed change in colors of light. The present inventors have found that the internal stress $s p$ on the peripheral region 103 can be identified in a different way respectively by dividing a portion (contour portion) that is present in a contour region of the hollow portion 101 at the time of observation and a portion (front region) that is present in front of the hollow portion 101 at the time of observation.

(Method for observing stress of contour region)

In the peripheral region 103, at the time of observing the contour region, the direction of the first internal stress $\sigma p$ becomes parallel to the direction of observation, that is, the direction of the incident light. The material of the peripheral region 103 is present in the direction of the internal stress $\sigma p$ widely. In this case, the photoelastic effect caused by the first internal stress $\sigma p$ observed in the contour region is a total of the change in the wavelength on the material that is present in the width W. Therefore, as shown in Fig. 2B, the change in the wavelength of a specific region 1031 (unit region) having a unit width w is obtained by dividing the change in wavelength obtained from the observed photoelastic effect by the width W.

Herein, when the peripheral region 103 is formed in an annular form with substantially the same thickness, since the width W is fixed, the change in the wavelength in a unit region can be obtained from the observed photoelastic effect. Thus, the internal stress of the contour region can be obtained easily. Specifically, by preparing a conversion table (which shows the relation between the wavelength (color) of observed light and the internal stress of the unit region) in accordance with the inner diameter or the outer diameter of the peripheral region, the internal stress generated in the unit region can be obtained from the wavelength (color) of light with the observed photoelastic effect.

When there are three-dimensional data showing the peripheral region 103, the width W of the peripheral region can be identified from the data.

Next, a three-dimensional analysis method of the internal stress in the contour region of the membranous model will be described.

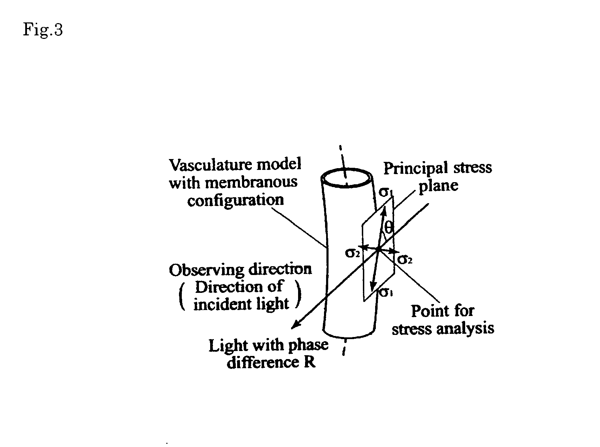

Fig. 3 is a schematic view to illustrate this analysis method. The above-mentioned internal stress $\sigma p$ (vector or tensor) will be described by the internal principal stress $\sigma 1$ and $\sigma 2$ that are constituent elements in terms of planar stress that is a subject of the present invention. With respect to each point 108 (each point of the peripheral wall forming the contour of the membranous model) on the contour region 107 of the membranous model obtained in accordance with the respective observation direction, when a tangent plane in parallel to the observation direction, that is, the direction of incident polarized light is presumed, the internal stresses obtained by this method, that is, the internal principal stresses $\sigma 1$ and $\sigma 2$ are defined as a stress on the tangent plane and are orthogonal to each other on the tangent plane. Therefore, these internal stresses $\sigma 1$ and $\sigma 2$ are present in the direction along the surface of the membranous model respectively and corresponds to the first internal stress specified in this specification. Note here that the internal stress in the thickness direction of the membranous model is negligible in the characteristics of the present invention.

Phase difference R that allows the photoelastic effect to be generated is expressed by the following expression:

$$R = \alpha\ (\sigma 1 \cos^2 \theta + \sigma 2 \sin^2 \theta)\ D$$

(in the expression, D denotes a length through which polarized light passes)

Therefore, observed photoelastic effect includes the effect of the above-mentioned internal principal stresses σ 1 and σ 2.

The present inventors have investigated earnestly to obtain the above-mentioned internal principal stresses σ 1 and σ 2 independently, and they have found that the values of the internal principal stresses σ 1 and σ 2 can be obtained by solving the following expression.

[Expression 1]

$$\theta = -\frac{1}{2}\tan^{-1}\frac{R_1/D_1 - R_3/D_3}{R_1/D_1 - 2R_2/D_2 + R_3/D_3} \qquad (0 < \theta < \frac{\pi}{4})$$

$$\sigma_1 = \frac{1}{2\alpha}\{\frac{R_1}{D_1}(1 + \operatorname{cosec} 2\theta) + \frac{R_3}{D_3}(1 - \operatorname{cosec} 2\theta)\}$$

$$\sigma_2 = \frac{1}{2\alpha}\{\frac{R_1}{D_1}(1 - \operatorname{cosec} 2\theta) + \frac{R_3}{D_3}(1 + \operatorname{cosec} 2\theta)\}$$

In solving the above-mentioned equations, polarized light is allowed to be incident at three different incident angles and the length through which the polarized light passes at that time are allowed to be D1, D2 and D3. From the observed photoelastic effects, the phase differences R1, R2 and R3 are obtained. Note here that R2 is a phase difference at θ=90° is satisfied.

By solving the above-mentioned expressions, it is possible to obtain the internal principal stresses σ 1 and σ 2 independently and easily.

(Method for observing stress in front region)

When a photoelastic effect is observed in front of the subject 100 to be observed by projecting polarized light from the back place of the subject 100 to be observed, the change in the wavelength (color), which is observed in the front region, is a total of the photoelastic effect on the film (hollow back film) that is present in the back surface of the hollow portion 101 and the photoelastic effect on the film (hollow front film) that is present in the front surface of the hollow portion 101 shown in Fig. 2A, so that the change in the wavelength on the front region (that is, a hollow front film) cannot be obtained independently.

The present inventors have investigated earnestly in order to obtain the change in the wavelength on the front region independently. As a result, they have found that the change in the wavelength on the front region can be obtained by the following method.

That is to say, in this case, by projecting the polarized light from the front side of the subject 100 to be observed, allowing light transmitting the hollows front film to be reflected by the front surface of the hollow portion 101, and observing the light returning again to the front side after transmitting the hollow front film in the front surface of the subject 100 to be observed, it is possible to obtain the change in the wavelength on the front region independently.

Such reflection on the front side of the hollow portion 101 can be realized by filling the inside of the hollow portion 101 with liquid with high reflectance or liquid containing a high reflectance material, or forming a layer formed of a high reflectance material on the surface (at least front surface) of the hollow portion 101.

In this case, the photoelastic effect caused by the first internal stress σ p observed in the contour region is twice as much as the total of the change in the wavelength on the film thickness of the hollow front film. Therefore, the change in the wavelength with respect to the unit width w' in the film thickness is obtained by dividing the change in the wavelength obtained from the observed photoelastic effect by the twice width W' as the film thickness.

More strictly, since the front region is a curved surface, the film thicknesses in the observation direction are different depending upon the respective points on each point on the curved surface. However, herein, when the peripheral region 103 is formed in an annular shape with substantially the same thickness, the distribution of the width W' is fixed. Therefore, it is possible to obtain the change in the wavelength of the unit width w' from the observed photoelastic effect promptly. Thus, it is possible to obtain the internal stress of the front region easily. Specifically, by preparing a conversion table (which shows the relation between the wavelength (color) of observed light and the internal stress of a unit region) in accordance with the positions inside the front region, the internal stress generated in the unit region can be obtained from the wavelength (color) of light with the observed photoelastic effect.

If there are three-dimensional data representing the peripheral region 103, it is possible to identify the width W' on each point in the above-mentioned front region from the data.

Next, three-dimensional analysis method of the internal stress in the front region of the membranous model will be described.

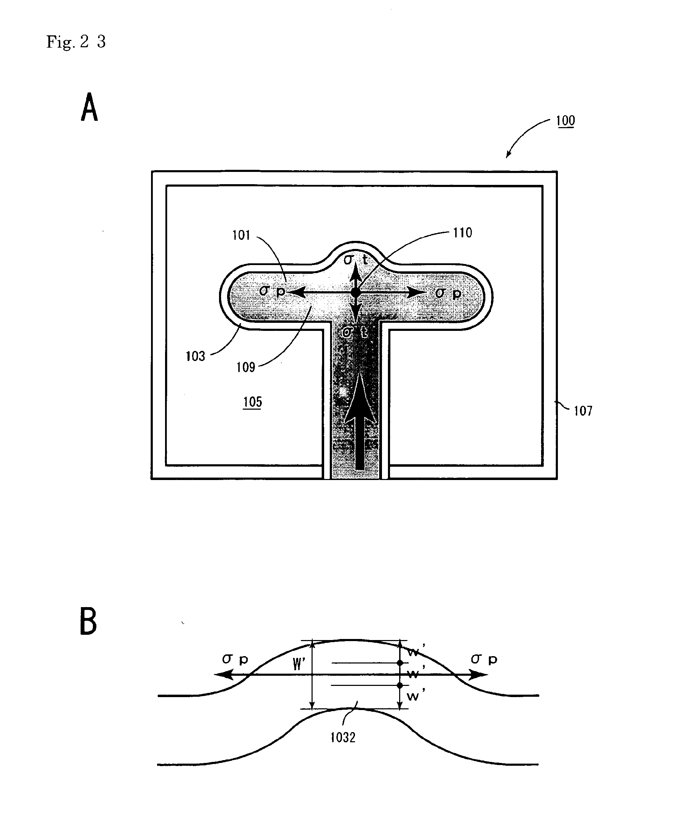

Fig. 23 is a schematic view to illustrate this analysis method. With respect to each point 110 (each point on the peripheral wall forming the front region of the membranous model) on the front region 109 of the membranous model obtained in accordance with the respective observation direction, when a tangent plane in parallel to the observation direction is presumed, the internal stresses, that is, the internal principal stresses(element of internal stress σp(vector or tensor)) σ1 and σ2 obtained by this method are defined as a stress on the tangent plane and are orthogonal to each other on the tangent plane. Therefore, these internal principal stresses σ1 and σ2 are present in the direction along the surface of the respective membranous model and corresponds to the first internal stress specified in this specification. Note here that the internal stress in the thickness direction of the membranous model is negligible in the characteristics of the present invention.

Since the front region 109 is present on the surface of the hollow portion 101, it is a curved surface. A photoelastic effect is observed on the curved surface. When the distribution of photoelasticity on the curved surface is projected onto a plane, the phase difference R on the respective points on the plane is represented by the expression.

$$R = \alpha \, (\sigma1 - \sigma2) \, D$$

(in the equation, D denotes a length through which polarized light passes)

Therefore, the observed photoelastic effect includes the effect of the above-mentioned internal principal stresses σ 1 and σ 2. In this case, however, since the internal principal stresses σ 1 and σ 2 are present in the plane perpendicular to the observation direction, by adjusting the direction of the polarizing plate for detecting the photoelastic effect, one of them can be optically deleted so as to obtain the values of internal principal stresses σ 1 and σ 2.

That is to say, another aspect of the present invention is represented as follows.

A stress observation system for a subjected body, including:

a subject to be observed having a hollow portion, in which the peripheral region of the hollow portion is a thin film formed of a translucent elastic material and when an external force is applied to the peripheral region, an internal stress is not substantially generated in the thickness direction and a first internal stress is generated in the direction along the surface thereof;

a means of allowing the inner peripheral surface of the peripheral region to be a reflective surface; and

a means of detecting a photoelastic effect generated in light that transmits through the internal surface and is reflected by a reflection surface,

wherein the photoelastic effect is exclusively caused by the first internal stress.

A further aspect of the present invention will be described.

A stress observation system for a subjected body, including:

a subject to be observed having a hollow portion, in which the peripheral region of the hollow portion is a thin film formed of a translucent elastic material and when an external force is applied to the peripheral region, the internal stress is not substantially generated in a thickness direction and a first internal stress is generated in a direction along the surface thereof; and

a means of detecting a photoelastic effect generated in light that transmits through the peripheral region of the subject to be observed,

wherein the photoelastic effect is exclusively caused by the first internal stress.

According to the thus configured stress observation system, even when the peripheral region of the hollow portion has a three-dimensional shape, the photoelastic effect occurring therein is exclusively caused by the first internal stress (stress in the direction along the surface of the peripheral region) and it is possible to identify the stress in the peripheral region from the photoelastic effect (wavelength of light).

Such a stress observation system is effective in observing the physical property of the peripheral region of the cavity when the subject to be observed is a three-dimensional model (a translucent model having a cavity replicating a body cavity). That is to say, in the insertion simulation of a catheter or liquid, when stress is applied to the peripheral region of the cavity of the three-dimensional model, the photoelastic effect occurs and the state of stress can be observed. Thus, it is possible to simulate the effect on the living body tissue when a catheter, liquid, or the like is inserted into the body cavity such as a blood vessel and the like (not essential).

In the above-mention, the peripheral region is a thin film formed of an elastic material and not restricted in the thickness direction when the external force is applied to this and only the compulsory displacement is allowed to occur in the direction along the surface. Thus, the stress generated on the peripheral region is only the first internal stress and stress to the membranous peripheral region can be identified from the photoelastic effect. Needless to say, in order to obtain the photoelastic effect, the peripheral region has a translucent property.

The thickness of the peripheral region is not particularly limited as long as the above-mentioned property can be maintained. However, according to the investigation by the present inventors, the thickness is preferably in a range of 0.1 to 5.0 mm, and more preferably in a range of 0.1 to 1.0 mm.

Furthermore, in order not to generate stress in the thickness direction of the peripheral region, the peripheral region is allowed to be free from physical restriction from the thickness direction. Specifically, the outside of the peripheral region is brought into contact with a easily deformable base material such as gel and liquid (water, etc.) directly or indirectly via space, and when the peripheral region is deformed in the thickness direction, the substantial resistance is not applied from the base material. In order not to give physical resistance to the peripheral region, the base material is required to have a predetermined margin (thickness). Since this base material is deformed easily, in order to secure the predetermined margin, the periphery of the base material is surrounded by a casing. Furthermore, it is preferable that between the formation material of the peripheral region and the formation material of the base material is highly adhesive to each other. It is advantageous because when slip occurs therebetween, frictional resistance occurs and irregular internal resistance may occur. An example of the formation material of such a peripheral region can include urethane resin or a urethane elastomer. An example of the formation material of the base material can include a silicone gel.

Furthermore, it is not preferable that the photoelastic effect is generated from the base material because it becomes a noise of the photoelastic effect of the peripheral region. Therefore, it is preferable that base material is a material such as gel or liquid (water, and the like) that does not substantially produce an internal stress.

Note here that inside the peripheral region, that is, in a hollow portion, arbitrary things can be inserted in observing the photoelastic effect. For example, in the case of a three-dimentional model, a catheter or liquid can be inserted.

The peripheral region of the hollow portion is preferably formed to have an annular cross section having a substantially the same thickness. Thus, it is possible to obtain the same a photoelastic effect (wavelength of light) even when the peripheral region is observed from any directions. Furthermore, in the peripheral region, the width of the material relating to the first internal stress is constant (the width can be identified from the diameter of the peripheral region), so that the stress of the unit region of the peripheral region (having a unit width) can be identified easily.

Another aspect of the present invention can be specified as follows.

a photoelastic effect caused by a first internal stress is obtained by a detecting means; and

a means of obtaining a width in a direction in which the first internal stress in a peripheral region is generated; and a means of calculating the stress in a unit region of the peripheral region from the obtained photoelastic effect and a width of the peripheral region are further provided.

According to the thus configured stress observation system, since the width in the direction in which the first internal stress is generated in the peripheral region is obtained, by dividing the photoelastic effect obtained by a detecting means (change in the wavelength of light) by the width, the change in wavelength in a unit region (having a unit width) in the peripheral region can be identified. Thus, the state of the stress generated in the peripheral region can be exactly identified.

Another aspect of the present invention is specified as follows.

A three-dimensional model stress observation system, including:

a translucent three-dimensional model in which at least a part of the peripheral region of at least the cavity replicating a body cavity is formed of a membranous elastic material having a photoelastic effect, the periphery of the membranous elastic material is surrounded by the base materia I formed of gel that does not substantially produce a photoelastic effect which is not substantially resistant in the thickness direction of the peripheral region; and a means of detecting the photoelastic effect generated in light passing through the three-dimensional model.

According to the thus configured stress observation system, the periphery of the membranous elastic material is surrounded by a gel-like base material. Therefore, in the three-dimensional model, the photoelastic effect is generated exclusively from an elastic material portion and is not generated from the gel-like base material. Consequently, the stress state of the membranous elastic material can be observed exactly.

According to a further aspect, a first model of the peripheral region of the body cavity is formed by rapid prototyping;

surrounding the first model with a die material so as to form a female mold;

removing the first model from the female mold;

infusing a polyurethane elastomer into the cavity of the female mold to harden thereof;

removing the female mold so as to obtain a membranous model formed of a polyurethane elastomer; and

surrounding the periphery of the membranous model with a base material which is formed of a silicone gel and which is not substantially resistant in the thickness direction of the membranous model, thereby manufacturing the three dimensional model suitable of observing the photoelastic effect.

[Example]

(First Example)

In order to obtain three-dimensional data regarding the shapes of cerebral blood vessels and affected sites, such as cerebral aneurysm to be targets of a three-dimensional model, a head portion of a patient was imaged with a helical scanning X-ray CT scanner having spatial resolution of 0.35 x 0.35x 0.5 mm while administering contrast media into the blood vessels of the region to be imaged. The three-dimensional data obtained by imaging were reconstructed into 500 pieces of 256-gradation two-dimensional images (tomographic data) having a resolution of 512 x 512 which were arranged in equal intervals along the body axis so that they are passed to a three-dimensional CAD software, and then image data corresponding to respective two-dimensional images are preserved in a 5.25-inch magneto-optical disk by a drive incorporated in the X-ray CT scanner in the order according to the imaging direction.

Then, by a 5.25-inch magneto-optical drive externally connected to a personal computer, the image data are taken into a storage device in the computer. From these image data, three-dimensional shape data having a STL format (format in which a three-dimensional curved surface is represented as an assembly of triangle patches), which are necessary for rapid prototyping, were generated by using a commercially available three-dimensional CAD software. In this conversion, by laminating input two-dimensional images based on the imaging intervals, a three-dimensional scalar field having intensity value as a scalar amount is constructed and specific intensity value giving the inner surface of the blood vessels is specified on the scalar field, and thereby three-dimensional shape data of lumen of blood vessel lumens are constructed as an isosurface (boundary surface of specific scalar value). Then, rendering approximating to triangle polygon is carried out with respect to the constructed isosurface.

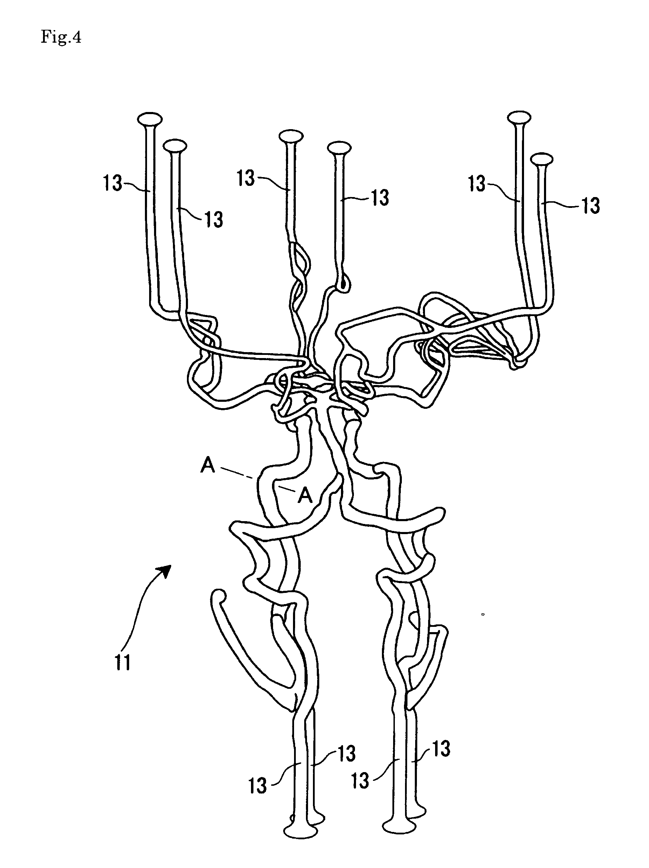

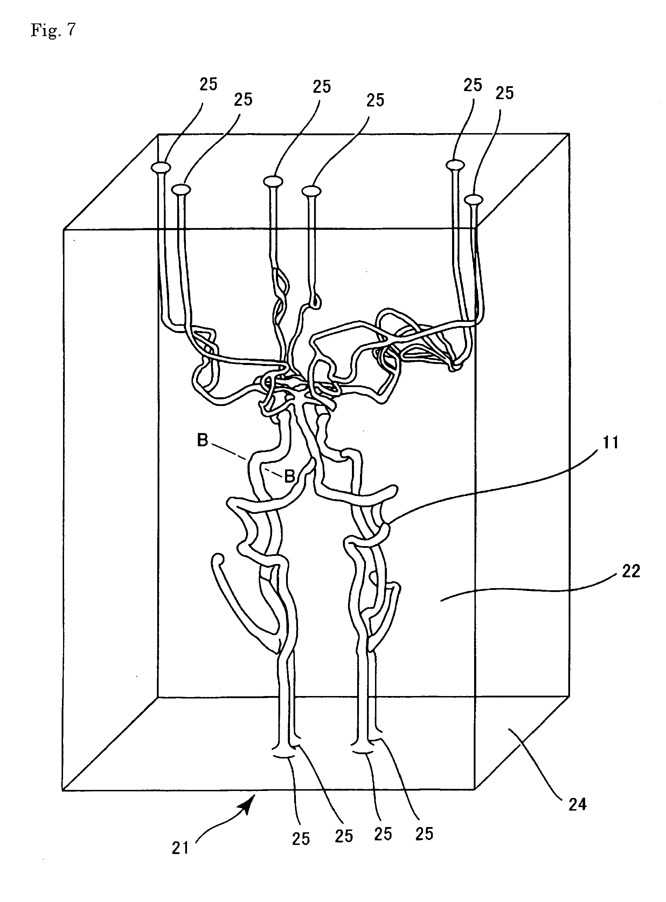

Note here that additional data are added to the three-dimensional shape data in this stage and guide portions 13 are expanded and protruded from the end of the body cavity model. This guide portion 13 is a hollow columnar member as shown in Fig. 4. By providing a hollow portion 31, the time required for rapid prototyping is shortened. A tip portion of this guide portion 13 has a large diameter and this portion is extended out to the surface of the three-dimensional model to form a large diameter opening 25 (see Fig. 7).

The generated three-dimensional shape data having an STL format are then transferred to an ink-jet type rapid prototyping system, and arrangement, laminating direction and laminating thickness of a model in the shaping system are determined and at the same time, a support is added to the model.

The thus generated data for rapid prototyping were sliced to the predetermined rapid prototyping thickness (13 μm) to generate a large number of slice data. Then, based on each of the thus obtained slice data, a shaping material (melting point: about 100°C, easily dissolved in acetone) containing p-toluensulfonamide and p-ethylbenzene sulfonamide as main components was melted by heating and allowed to eject. Thereby, a resin hardened layer with specified thickness having a shape that corresponds to each of the slice data was formed and laminated on a one-by-one basis. Thus, rapid prototyping was carried out. By removing a support after the last layer was formed, a rapid prototyping model (body cavity model 12) of a region of cerebral blood vessel lumens was formed.

Furthermore, the surface of the body cavity model 12 is treated to be smooth.

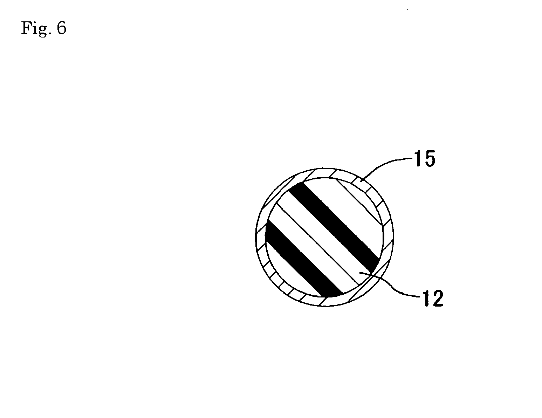

The silicone rubber layer 15 was formed on the entire surface of the body cavity model 12 in the thickness of about 1 mm (see Fig. 6). This silicone rubber layer 15 is obtained by dipping the body cavity model 12 in a silicon rubber bath, taking it out therefrom, and drying while rotating the body cavity model. This silicone rubber layer becomes a membranous model.

In this Example, the entire surface of the body cavity model 12 was coated with the silicone rubber layer 15. However, a predetermined portion of the body cavity model 12 can be coated with the silicon rubber layer 15 partially.

A core 11 obtained by coating the body cavity model 12 with a membranous model formed of the silicone rubber layer 15 is set in a rectangular casing 24. This casing 24 is formed of a transparent acrylic plate. Into the casing, a material of the base material 22 is infused and gelled.

As a material for the base material 22, two-liquid mixing type silicone gel was used. This silicone gel is transparent and has a physical property that is extremely similar to the soft tissues around the blood vessels. Polycondensation type silicone gel can also be used.

The physical property of the material of the base material 22 is adjusted to be matched to the physical property of the tissues around the blood vessels that are subject of the membranous model.

Note here that in this Example, by using penetration, flowability, stickness, stress relaxation property, and the like as an index, and finally using the touch (feeling of insertion of the catheter) by an operator, the physical property is allowed to approach that of the living body tissue.

In the case of a silicone gel, it is possible to prepare the polymer bone and furthermore, by mixing a silicone oil, the physical property can be adjusted.

In this Example, as the material for forming the membranous model, a silicone elastomer (WACKER ASAHIKASEI SILICONE CO., LTD, trade name: R601) was selected, and for the base material, a silicone gel (WACKER ASAHIKASEI SILICONE CO., LTD, trade name: SilGel612) was selected. The elastic modulus of this silicon gel is about 5.0 kPa, loss factor tand (viscoelastic parameter) is about 1.0 and elongation is 1000 %. Furthermore, adhesiveness (adhesive strength) with respect to the silicon elastomer is about 8 kPa.

Besides a silicone gel, a glycerine gel can be used. This glycerine gel is obtained as follows. That is to say, gelatin was dipped in water, to which glycerine and phenolate were added, followed by dissolving while heating. While the temperature is high, the mixture was filtrated. When the temperature becomes a temperature that does not affect the core, the mixture was infused and cooled.

Then, the body cavity model 12 inside the core 11 is removed. As the method for removing the body cavity model, a hybrid method was employed. That is to say, a sample is heated and the material of the body cavity model is allowed to flux to the outside from the opening 25. Furthermore, by infusing acetone into the hollow portion so as to dissolve and remove the material of the body cavity model.

Thereafter, the sample was heated in an incubator whose temperature was set to 120°C for 1 hour so as to remove fogging of the membranous model (silicone rubber layer 15).

The thus obtained three-dimensional model 21 has a configuration in which the membranous model 15 is embedded in the base material 22 formed of silicon gel as shown in Figs. 7 and 8. Since the silicone gel has the physical property similar to the living body tissue, the membranous model 15 shows the dynamic behavior that is the same level as that of the blood vessels.

(Second Example)

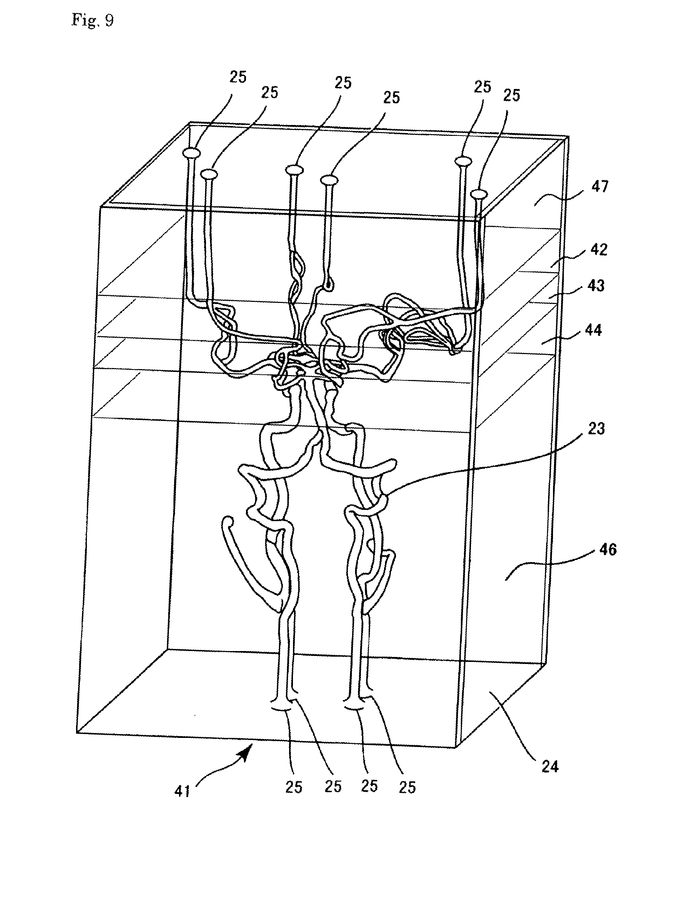

Fig. 9 shows a three-dimensional model 41 in accordance with another Example. Note here that the same reference numerals are given to the same elements in Fig. 7 and description therefor will be omitted herein.

In this example, in order to correspond the actual brain tissue, the base material is formed in a multilayer structure and base materials 42, 43 and 44 having different physical properties depending upon the respective sites of the brain were laminated. The base material 42 corresponds to the physical property of the subarachnoid cavity around a cerebral artery portion, the base material 43 corresponds to the physical property of the soft tissue around the communicating artery portion, and the base material 44 corresponds to the physical property of the sinus cavernosus around the carotid artery portion.

Base materials 46 and 47 corresponding to other portions are the same as those shown in Fig. 7. Furthermore, the other portions 46 and 47 can be formed of materials other than gel (solid, and the like).

(Third Example)

Fig. 8 shows a three-dimensional model 51 in accordance with another Example.

In this three-dimensional model 51, a void portion 53 is provided in the base material 52 and a part of the membranous model 55 is present in the void portion 53. The void portion 53 corresponds to the subarachnoid cavity.

In this void portion 53, to the core (body cavity model + membranous model), a cover corresponding to the void portion 53 is covered and a base material 52 formed of a silicone gel is infused around thereof. Then, by removing the body cavity model and the cover, a configuration shown in Fig. 9 can be obtained.

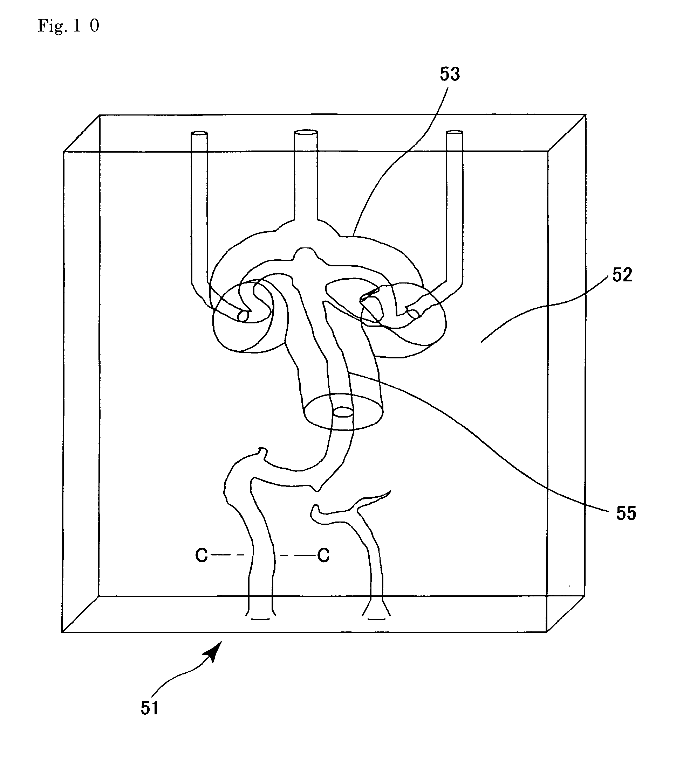

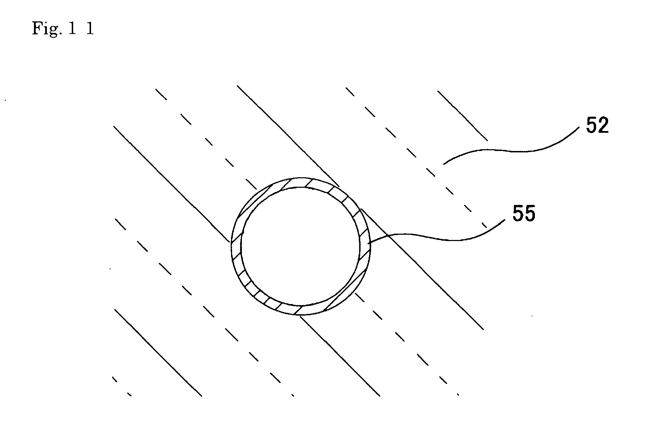

Fig. 11 is a cross-sectional view taken on line C-C of Fig. 10, showing that membranous model 55 is embedded in the base material 51 formed of silicon gel.

Note here that a material having the different physical property from that of the base material 52 (preferably, having the same physical property as that of the subarachnoid cavity (gel, etc.)) may be infused in the void portion 53. It is preferable that this infusion material has a refractive index that is substantially equal to that of the base material 52.

The shape of the void portion may be formed arbitrarily.

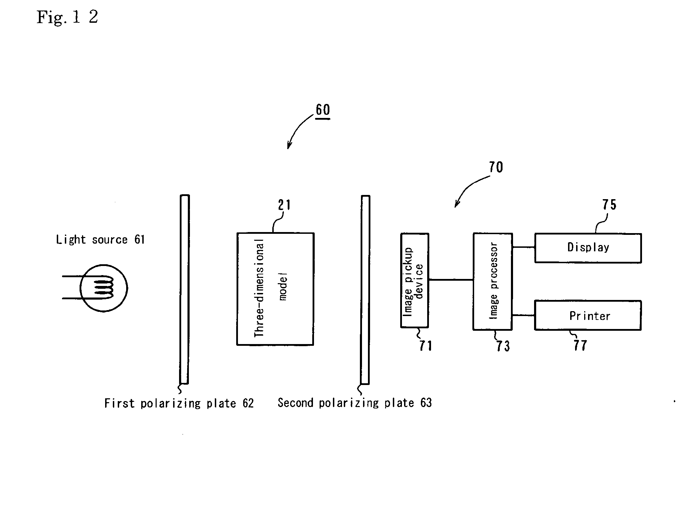

Fig. 12 shows a configuration of a stress observation system 60 in accordance with the Example of the present invention.

The stress observation system 60 of this Example is schematically configured by a light source 61, a pair of polarizing plates 62 and 63, the three-dimensional model 21 shown in Fig. 7 and a photo-receiving portion 70.

It is preferable that the light source 61 uses a white light source. Sun light may be used as a light source. Furthermore, a light source of single color can be used. The direction of polarization of the first polarizing plates 62 and second polarizing plat (original sentence is wrong) 63 orthogonal to each other. Thus, as illustrated in Fig. 1, the photoelastic effect caused by the internal stress of the three-dimensional model 21 in the contour region can be observed at the side of a second polarizing plate 63.

For example, when a catheter is inserted into a cavity of the three-dimensional model 21, if the catheter and the peripheral wall of the cavity interfere with each other, stress occurs in the peripheral wall of the cavity and the photoelastic effect (interference fringe) appears. Furthermore, the state of stress in an aneurysmal peripheral region accompanied with deformation of aneurysmal when a coil embolization is executed can be also simulated from the photoelastic effect.

Note here that in this three-dimensional model, the membranous model is formed of a polyurethane elastomer, and a silicone gel is employed as a base material. Thus, the internal stress of the membranous model can be observed as a photoelastic effect.

In this Example, the light source 61, the first polarizing plate 62, the three-dimensional model 21 and the second polarizing plate 63 were aligned. However, the second polarizing plate 63 may be displaced (that is, displaced from the line). Since light reflected irregularly by the cavity of the three-dimensional model 21, in the shape of the cavity, when second polarizing plate 63 may be disposed with displacement, the photoelastic effect may be able to be observed more clearly.

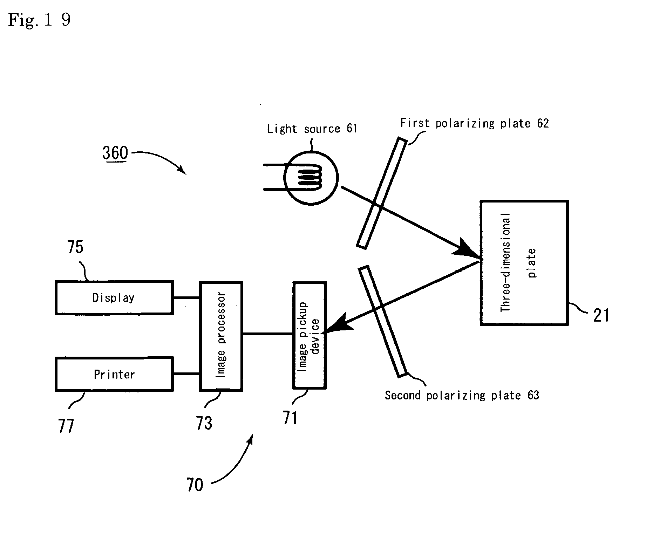

Fig. 19 shows stress observation system 360 in accordance with other Examples relating to stress observation system 60 (the same reference numerals are given to the same elements shown in Fig. 12 and the description therefor will be omitted herein). In this Example, the light source 61 and the first polarizing plate 62, and the second polarizing plate 63 and the photo-receiving portion 70 are made into pairs respectively, moved toward one side of the three-dimensional model 21 and disposed in parallel. Thus, the photoelastic effect caused by the internal stress on the front region of the three-dimensional model 21 can be observed at the side of the second polarizing plate 63.

Light emitted from the light source 61 passes through the first polarizing plate 62, enters the three-dimensional model 21, further passes through a membranous portion of the three-dimensional model 21 (membranous model), then is reflected by the surface of the void portion of the membranous model, passes through the membranous portion of the three-dimensional model 21 (membranous model) again, passes through the polarizing plate 63 and a second quarter-polarizing plate 83 and is observed on the photo-receiving portion 70. According to this method, the photoelastic effect on the projected surface by the light source 61 on the surface of the void portion can be observed. Note here that in the Example, by filling the inside the void portion with liquid with high reflectance or liquid containing a high reflectance material, or forming a layer formed of high reflectance materials on the surface of void portion, the incident light from the light source 61 is allowed to be reflected by the surface of the void portion.

In these two Examples (stress observation system 60 shown in Fig. 12 and stress observation system 360 shown in Fig. 19), the photo-receiving portion 70 includes an image pickup device 71 consists of CCD, and the like, an image processor 70 for processing picture images of a photoelastic effect taken by the image pickup device 71, as well as a display 75 and a printer 77 for outputting processing results from the image processing portion 70.

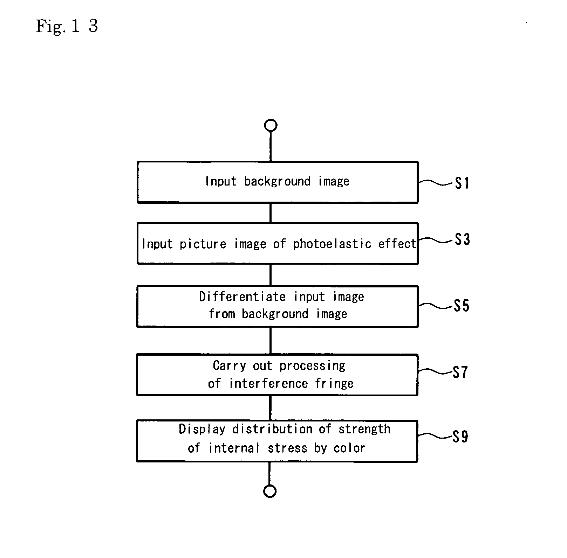

The image processor 73 carries out the following process (see Fig. 13).

Firstly, picture image in its initial state to which no external force is applied to the three-dimensional model 21 is taken as a background picture image (step 1). When the three-dimensional model 21 is formed of a material with high modulus of photoelasticity, a photoelastic effect may be generated by self-weight. Therefore, a picture image with interference fringe by the photoelastic effect while light is emitted from the light source 61 and external force is further applied (for example, a catheter is inserted) is input (step 3) and thereafter the background picture image is differentiated therefrom (step 5).

When the three-dimensional model 21 is formed of a material with high modulus of photoelasticity, dependent upon the internal stress, fine interference fringes appear in a repeating pattern. The image processor 73 numerically expresses the internal stress by counting the number of patterns per unit area (step 7). Then, in the picture image relating to the shape of the three-dimensional model 21 obtained via a second polarizing plate 63, external display is made by giving a color that corresponds to the values to a portion in which the internal stress is generated (step 9).

In this Example, the photo-receiving portion 70 carries out image processing of interference fringe by the photoelastic effect. However, the interference fringe may be observed by an observer directly or via the image pickup device 71.

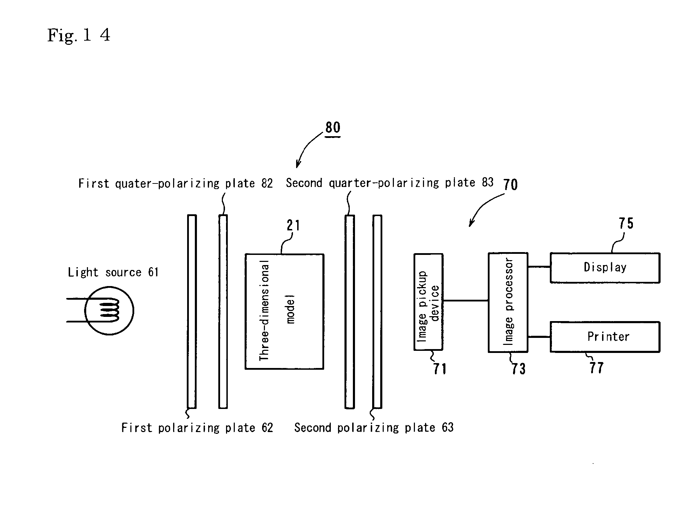

Fig. 14 shows a stress observation system 80 in accordance with another Example. Note here that the same reference numerals are given to the same elements in Fig. 12 and description therefor will be omitted herein.

In this Example, between the first polarizing plate 62 and the three-dimensional model 21, a first quarter-polarizing plate 82 is intervened and between the three-dimensional model 21 and the second polarizing plate 63, a second quarter-polarizing plate 83 is intervened. Thus, the photoelastic effect in the contour region can be observed by the circular polarization method. According to the observation based on the circular polarization method, since the effect in the relative direction between the polarizing plate and the internal principal stress is not appeared in the interference fringe, it becomes easy to control attitude of the three-dimensional model.

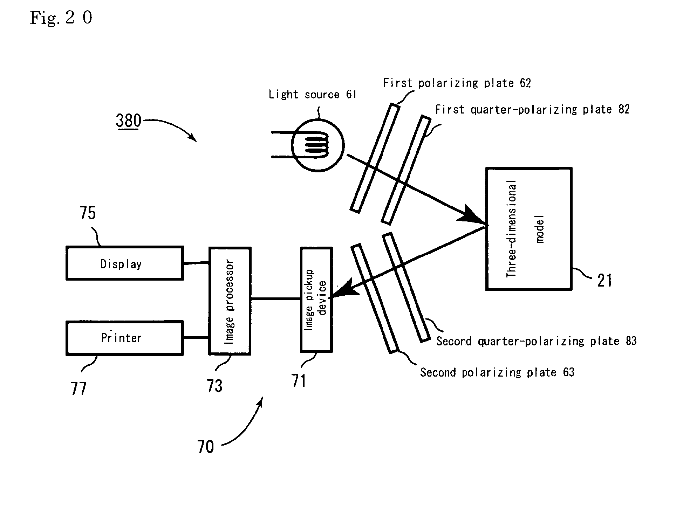

In the stress observation system 380 in accordance with another Example shown in Fig. 20 (the same reference numerals will be given to the same elements shown in Fig. 12 and description therefor will be omitted), the light source 61 and the first polarizing plate 62, and the second polarizing plate 63 and the photo-receiving portion 70 are made into pairs respectively and disposed in parallel at one side of the three-dimensional model 21. Furthermore, the first quarter-polarizing plate 82 is intervened between the first polarizing plate 62 and the three-dimensional model 21 and the second quarter-polarizing plate 83 is intervened between the three-dimensional model 21 and the second polarizing plate 63. Thus, a photoelastic effect caused by the internal stress on the front region of the three-dimensional model 21 can be observed by the circular polarization method at the side of the second polarizing plate 63.

In this Example, light emitted from the light source 61 passes through the first polarizing plate 62 and the first quarter-polarizing plate 82, enters the three-dimensional model 21, further passes through the membranous portion of the three-dimensional model 21 (membranous model), then is reflected by the surface of the void portion in the membranous model, passes through the membranous portion of the three-dimensional model 21 (membranous model) again, passes through the polarizing plate 63 and the second quarter-polarizing plate 83 and is observed on the photo-receiving portion 70. According to this method, the photoelastic effect on the projected surface by the light source 61 on the surface of the void portion can be observed without being affected by the stress direction. Note here that in the Example, by filling the inside of the void portion with liquid with high reflectance or liquid containing a high reflectance material, or forming a layer formed of high reflectance materials on the surface of the void portion, the incident light from the light source 61 is allowed to be reflected by the surface of the void portion.

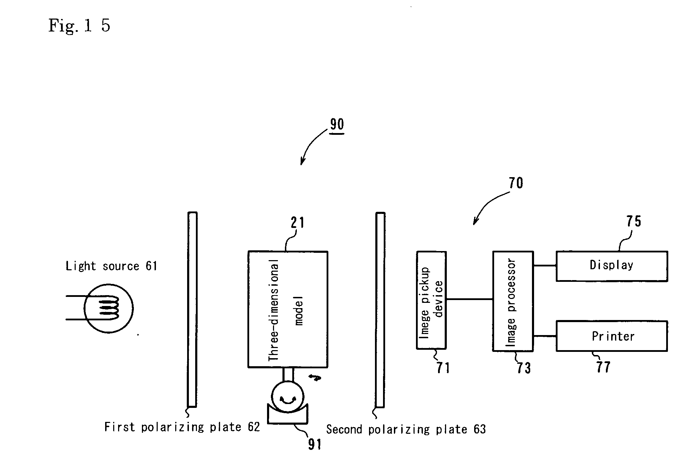

Fig. 15 shows a stress observation system 90 in accordance with another Example. The same reference numerals are given to the same elements in Fig. 12 and description therefor will be omitted herein.

In this Example, the three-dimensional model 21 is held by a rotation and tilting stage 91 and allowed the three-dimensional model 21 to be rotated and/or tilted. Thus, the direction of incident light with respect to the three-dimensional model 21 can be changed and the stress distribution in the contour region of the three-dimensional model 21 can be observed three-dimensionally. Thus, simulation in the three-dimensional model can be carried out in detail.

Note here that in the three-dimensional model 21 shown in Fig. 15, this rotation and tilting stage 91 can be used.

In this Example, the three-dimensional model 21 is rotated and/or tilted. However, the same effect can be obtained when surrounding elements are rotated and/or tilted with the attitude of the three-dimensional model 21 is fixed.

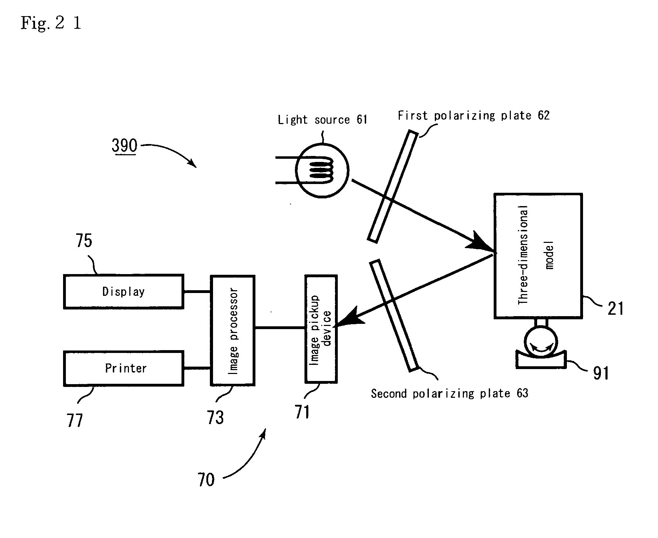

Furthermore, the stress observation system 390 in accordance with another Example shown in Fig. 21 (the same reference numerals are given to the same elements shown in Fig. 12 and description therefor is omitted), similar to the stress observation system 90 shown in Fig. 15, allows the three-dimensional model 21 to be held on the rotation and tilting stage 91 to enable the three-dimensional model 21 to be rotated and/or tilted. According to the device, by changing the direction of incident light with respect to the three-dimensional model 21, the stress distribution in the front region of the three-dimensional model 21 can be observed three-dimensionally. In this Example, the three-dimensional model 21 is rotated and/or tilted. However, the same effect can be obtained even when surrounding elements are rotated and/or tilted with the attitude of the three-dimensional model 21 fixed.

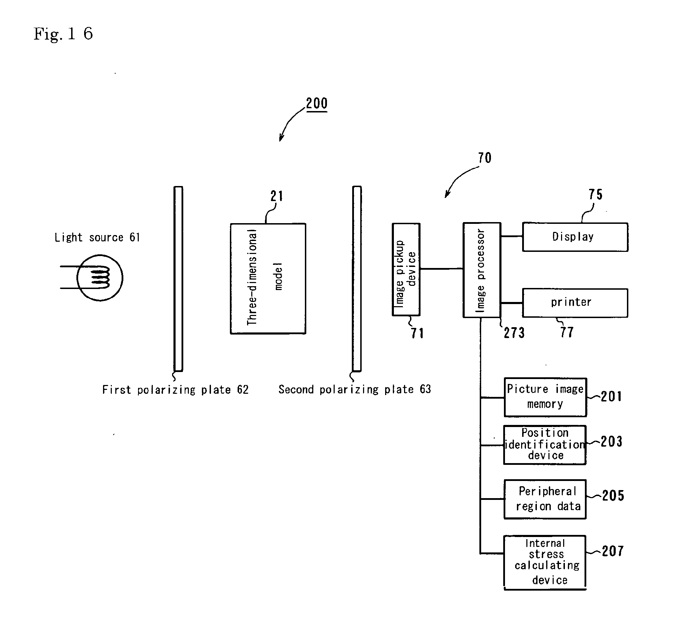

Fig. 16 shows a stress observation system 200 in accordance with a further Example. The same reference numerals are given to the same elements in Fig. 12 and description therefor will be omitted herein.

The image processor 273 of this stress observation system 200, which enables the stress distribution in the contour region, includes data (peripheral region data) 205 expressing the peripheral region 103 shown in Fig. 2.

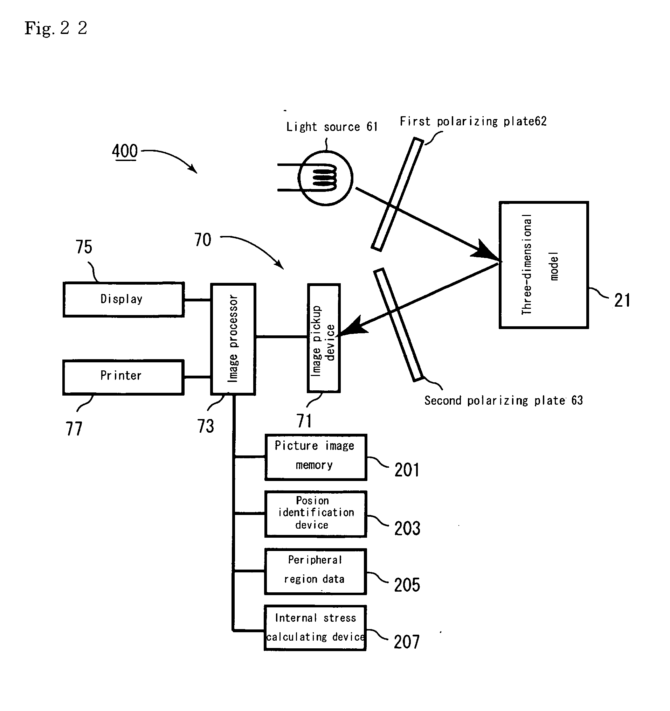

Furthermore, stress observation system 400 of a further Example shown in Fig. 22 (the same reference numerals are given to the same elements in Fig. 12 and description therefor will be omitted herein), similar to the stress observation system 200 shown in Fig. 16, includes data (peripheral region data) 205 expressing the peripheral region 103 shown in Fig. 2 and enables the stress distribution in the front region.

In these two Examples (that is, the stress observation system 200 shown in Fig. 16 and the stress observation system 400 shown in Fig. 22), picture images taken by the image pickup device 71 and including a photoelastic effect are taken and preserved in a picture image memory 201. In a position identification system 203, by analyzing the picture image, and the analyzed data are correlated with the peripheral region data 205. Thus, the position of the obtained photoelastic effect and the observing direction are identified. For example, by providing a marker in the three-dimensional model, based on the position of this marker, taken picture image and the peripheral region data can be correlated to each other. An internal stress calculating device 207 calculates the width W of the material of the peripheral region in the direction of the first internal stress causing the photoelastic effect from the peripheral region data 205. Then, by dividing the value of the photoelastic effect (apparent internal stress) obtained by the image pickup device by the width W of the material, the internal stress in the unit region of the peripheral region is calculated.

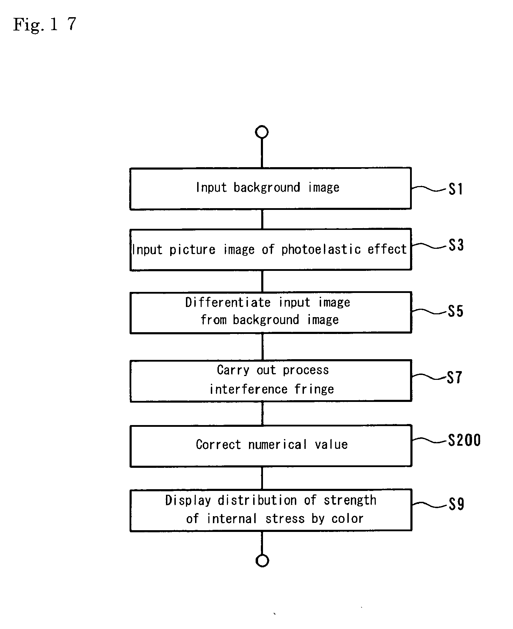

Thus, the steps 200 shown in Fig. 17 is completed. That is to say, the internal stress that is expressed as a numerical value in the step 7 is corrected based on the width W of the peripheral region and the internal stress is allowed to be identified for every unit region of the peripheral region. In Fig. 17, the same elements are given to the same steps as in Fig. 13 and the description therefor will be omitted.

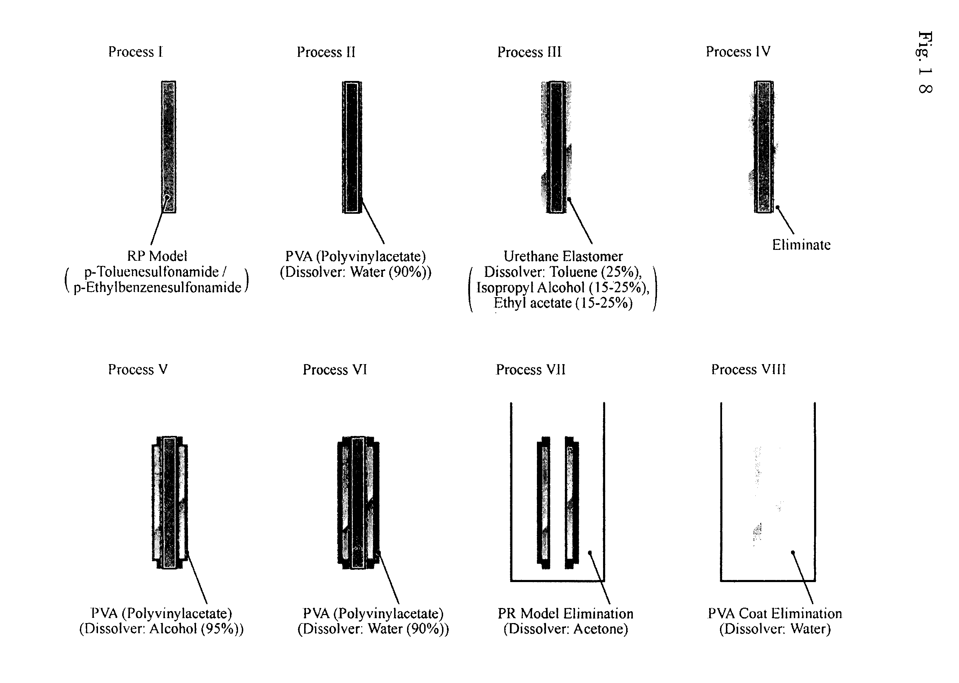

Fig. 18 shows a manufacturing method of a membranous model suitable for observing the photoelastic effect.

In process I, a body cavity model is prepared and an entire surface of the body cavity model is coated with PVA by a dipping method (process II). In process III, the sample obtained in the process II is coated with a polyurethane elastomer by a dipping method. Thereafter, by considering the affinity with respect to a polyurethane elastomer film, PVA is coated by a dipping method twice (process V, VI). Thus, the polyurethane elastomer film is completely coated with PVA film from the upper and lower directions.

Thereafter, the body cavity model is selectively dissolved by dipping in an organic solvent to elute (process VII). Thereafter, finally, by dissolving the PVA in water (process VIII), a membranous model formed of a polyurethane elastomer is obtained.

Thus, the surface of the body cavity model is coated with an aqueous material film and a polyurethane elastomer layer is formed on the surface of this film. The surface of the polyurethane elastomer layer is coated with an aqueous material layer and the body cavity model is dissolved in an organic solvent. Thereafter, an aqueous material is dissolved in water, and thus the membranous model formed of a polyurethane elastomer is obtained. Thus, all processes can be carried out by a dipping process. Therefore, the manufacturing method becomes easy and manufacturing cost can be reduced.

The present invention is not limited to the description of the above embodiments and Examples. A variety of modifications, which are within the scopes of the following claims and which are achieved easily by a person skilled in the art, are included in the present invention.

Hereinafter, the following matters are disclosed.

(1) A three-dimensional model comprising:

a membranous model formed of a translucent material and having a cavity replicating a body cavity such as a blood vessel and the like (not essential), which was formed based on tomogram data of a subject, inside thereof;
a base material surrounding the membranous model; and
a translucent casing accommodating the base material.

(2) The three-dimensional model described in (1) in which a refractive index of the membranous model is substantially equal to that of the base material.

(3) The three-dimensional model described in (1) or (2) in which the base material is formed of a silicone gel or a glycerine gel.

(4) A three-dimensional model in which a membranous model having a cavity replicating a body cavity such as a blood vessel and the like (not essential), which was formed based on tomogram data of a subject, is embedded in a gel-like base material and the cavity of the membranous model can be recognized.

(5) The three-dimensional model described in (4) in which the base material is formed of a silicone gel or a glycerine gel.

(6) A three-dimensional model in which a base material formed of a first translucent gel-like material is provided with a cavity replicating a body cavity and a translucent second material is formed in a film form on the peripheral wall of the cavity.

(7) The three-dimensional model described in (6) in which the first material is a silicone gel or a glycerine gel.

(8) A three-dimensional model in which a base material formed of a first translucent gel-like material is provided with a cavity replicating a body cavity and the peripheral wall of the cavity is treated to have a hydrophilic property or a hydrophobic property.

(9) A method for manufacturing a three-dimensional model, the method comprising:

rapid prototyping a body cavity model such as a blood vessel and the like based on tomogram data of a subject;
forming a core by surrounding the periphery of the body cavity model with a molding material of the model in a form of a film;
setting the core in a casing and infusing a base material to the casing to be gelled; and
removing the body cavity model after a material of the base material is gelled.

(10) A method for manufacturing a three-dimensional model, the method comprising:

forming a base material formed of a first translucent gel-like material and having a cavity replicating a body cavity such as a blood vessel and the like, which was formed based on tomogram data of a subject, inside therein; and

forming a second translucent material on an inner peripheral surface of the cavity.

(11) A method for manufacturing a three-dimensional model, the method comprising:

forming a base material formed of a first translucent gel-like material and having a cavity replicating a body cavity such as a blood vessel and the like (not essential), which was formed based on tomogram data of a subject, inside therein; and

treating the inner peripheral surface of the cavity so as to have a hydrophilic property or a hydrophobic property.

BRIEF DESCRIPTION OF THE DRAWINGS

Fig. 1 is a view to illustrate a photoelastic effect.
Fig. 2 is a conceptual diagram showing an operation of the present invention.
Fig. 3 is a schematic view showing the relation between internal stress and incident light.
Fig. 4 is a perspective view showing a core 11 in accordance with an Example.

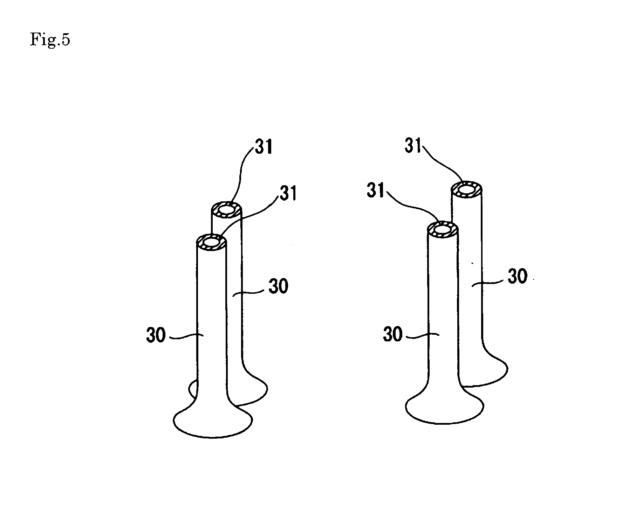

Fig. 5 is a perspective view showing a guide portion.
Fig. 6 is a cross-sectional view taken on line A-A of Fig. 2, showing the configuration of the core.
Fig. 7 shows a three-dimensional model in accordance with an Example of the present invention.
Fig. 8 is a cross-sectional view taken on line B-B of Fig. 7, showing a state in which a membranous model is embedded in a base material.
Fig. 9 shows a three-dimensional model in accordance with another Example.
Fig. 10 shows a three-dimensional model in accordance with a further Example.
Fig. 11 is a cross-sectional view taken on line C-C of Fig. 10, showing a state in which a membranous model is embedded in the base material.
Fig. 12 is a schematic view showing a configuration of a stress observation system in accordance with an Example of the present invention.
Fig. 13 is a flowchart showing an operation of the photo-receiving portion of a stress observation system in accordance with an Example of the present invention.
Fig. 14 is a schematic view showing a configuration of a stress observation system in accordance with another Example of the present invention.
Fig. 15 is a schematic view showing a configuration of a stress observation system in accordance with a further Example of the present invention.
Fig. 16 is a schematic view showing a configuration of a stress observation system in accordance with a yet further Example of the present invention.
Fig. 17 is a flowchart showing an operation of the stress observation system.
Fig. 18 is a flowchart showing a method of manufacturing a membranous model suitable for observing the photoelasticity.
Fig. 19 is a schematic view showing a configuration of the stress observation system of another Example of the present invention.
Fig. 20 is a schematic view showing a configuration of the stress observation system of a further Example of the present invention.
Fig. 21 is a schematic view showing a configuration of the stress observation system of a yet further Example of the present invention.
Fig. 22 is a schematic view showing a configuration of the stress observation system of a further Example of the present invention.
Fig. 23 is a conceptual diagram showing an effect of the present invention.

REFERENCE MARKS IN THE DRAWINGS

| 11 | core |
| 12 | body cavity model |
| 15,55 | silicone rubber layer (membranous model) |
| 21, 41, 51 | three-dimensional model |
| 22, 42, 43, 44, 46, 47, 52 | base material |

**Claims**

1.  A three-dimensional model, comprising:

    a membranous model replicating a body cavity such as a blood vessel inside thereof; and
    a translucent base material surrounding the membranous model, having elasticity and adhesiveness with respect to the membranous model.

2.  The three-dimensional model according to claim 1, further comprising a translucent casing accommodating the base material, wherein the base material has a margin for allowing a free change of the membranous model between the casing and the membranous model.

3.  The three-dimensional model according to claim 1, wherein the membranous model is formed of a silicone elastomer or a urethane elastomer, and the base material is formed of a silicone gel or a urethane gel.

4.  The three-dimensional model according to claim 1, wherein a refractive index of the membranous model is substaitially equal to a refractive index of the base material.

5.  The three-dimensional model according to claim 1, wherein the membranous model is formed of a translucent material and when an external force is applied to this, internal stress is not substantially generated in a thickness direction but generated in a direction along a surface;
    the base material is formed of a material that does not substantially produce an internal stress; and
    the three-dimensional model is used for observing a photoelastic effect.

6.  The three-dimensional model according to claim 5, wherein the membranous model is formed to have an annular shaped cross-section having substantially the same thickness.

Fig.1

Fig.2

A

B

Fig.3

Vasculature model with membranous configuration

Principal stress plane

$\sigma_1$

$\theta$

$\sigma_2$   $\sigma_2$

Observing direction
( Direction of incident light )

$\sigma_1$

Point for stress analysis

Light with phase difference R

Fig.4

Fig.5

Fig. 6

15

12

Fig. 7

Fig. 8

Fig. 9

Fig. 1 0

Fig. 1 1

Fig. 1 2

<u>60</u>

70

75

Light source 61

Three-dimensional model 21

Image pickup device 71

Image processor 73

Display 75

Printer 77

First polarizing plate 62        Second polarizing plate 63

Fig. 1 3

```
                          ○
                          │
        ┌─────────────────────────────────┐
        │      Input background image     │──── S1
        └─────────────────────────────────┘
                          │
        ┌─────────────────────────────────┐
        │ Input picture image of photoelastic effect │──── S3
        └─────────────────────────────────┘
                          │
        ┌─────────────────────────────────┐
        │     Differentiate input image   │
        │       from background image     │──── S5
        └─────────────────────────────────┘
                          │
        ┌─────────────────────────────────┐
        │        Carry out processing     │
        │        of interference fringe   │──── S7
        └─────────────────────────────────┘
                          │
        ┌─────────────────────────────────┐
        │  Display distribution of strength │
        │     of internal stress by color │──── S9
        └─────────────────────────────────┘
                          │
                          ○
```

Fig. 1 4

**80**

First quater-polarizing plate 82    Second quarter-polarizing plate 83    **70**

75

21

Light source 61

Three-dimensional model

Image pickup device

Image processor

Display

Printer

71    73    77

First polarizing plate 62    Second polarizing plate 63

Fig. 1 5

Light source 61

First polarizing plate 62

Three-dimensional model 21

Second polarizing plate 63

91

Image pickup device 71

Image processor 73

Display 75

Printer 77

90

70

Fig. 1 6

<u>200</u>

70

75

Light source 61

Three-dimensional model — 21

Image pickup device — 71

Image processor

273

Display

printer — 77

First polarizing plate 62

Second polarizing plate 63

Picture image memory — 201

Position identification device — 203

Peripheral region data — 205

Internal stress calculating device — 207

Fig. 1 7

```
                          ○
                          │
        ┌─────────────────────────────────────┐
        │      Input background image         │───S1
        └─────────────────────────────────────┘
                          │
        ┌─────────────────────────────────────┐
        │Input picture image of photoelastic effect│───S3
        └─────────────────────────────────────┘
                          │
        ┌─────────────────────────────────────┐
        │       Differentiate input image      │───S5
        │        from background image         │
        └─────────────────────────────────────┘
                          │
        ┌─────────────────────────────────────┐
        │          Carry out process           │───S7
        │        interference fringe           │
        └─────────────────────────────────────┘
                          │
        ┌─────────────────────────────────────┐
        │       Correct numerical value        │───S200
        └─────────────────────────────────────┘
                          │
        ┌─────────────────────────────────────┐
        │    Display distribution of strength  │───S9
        │     of internal stress by color      │
        └─────────────────────────────────────┘
                          │
                          ○
```

Fig. 18

EP 1 677 273 A1

Process I

Process II

Process III

Process IV

RP Model
( p-Toluenesulfonamide / )
( p-Ethylbenzenesulfonamide )

PVA (Polyvinylacetate)
(Dissolver: Water (90%))

Urethane Elastomer
( Dissolver: Toluene (25%), )
( Isopropyl Alcohol (15-25%), )
( Ethyl acetate (15-25%) )

Eliminate

Process V

Process VI

Process VII

Process VIII

PVA (Polyvinylacetate)
(Dissolver: Alcohol (95%))

PVA (Polyvinylacetate)
(Dissolver: Water (90%))

PR Model Elimination
(Dissolver: Acetone)

PVA Coat Elimination
(Dissolver: Water)

Fig. 19

360

Light source 61　　First polarizing plate 62

75

Display

Printer

Image processor

Image pickup device

Three-dimensional plate

21

Second polarizing plate 63

77　　73　　71

70

Fig. 2 0

Light source 61

First polarizing plate 62

First quarter-polarizing plate 82

380

75

Display

Image processor

Image pickup device

Three-dimensional model

21

Printer

77

73

71

Second quarter-polarizing plate 83

Second polarizing plate 63

70

Fig. 2 1

Light source 61    First polarizing plate 62

390

75

Display

Printer

77        73      71

70

Image processor

Image pickup device

Three-dimensional model

21

91

Second polarizing plate 63

Fig. 2 2

Light source 61   First polarizing plate62

400

Three-dimensional model

21

75

70

Display

Image processor

Image pickup device

Second polarizing plate 63

Printer

77   73   71

Picture image memory   201

Posion identification device   203

Peripheral region data   205

Internal stress calculating device   207

Fig. 2 3

A

B

**INTERNATIONAL SEARCH REPORT**

| International application No. |
| --- |
| PCT/JP2004/015371 |

A. CLASSIFICATION OF SUBJECT MATTER
  Int.Cl⁷  G09B23/30

According to International Patent Classification (IPC) or to both national classification and IPC

B. FIELDS SEARCHED

Minimum documentation searched (classification system followed by classification symbols)
  Int.Cl⁷  G09B23/28-23/34

Documentation searched other than minimum documentation to the extent that such documents are included in the fields searched
  Jitsuyo Shinan Koho          1922-1996    Toroku Jitsuyo Shinan Koho    1994-2004
  Kokai Jitsuyo Shinan Koho    1971-2004    Jitsuyo Shinan Toroku Koho    1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 62-249644 A  (Nippon Oil Co., Ltd.),<br>30 October, 1987 (30.10.87),<br>Full text<br>& EP 243864 A2 | 1,4<br>2,3,5,6 |
| Y | JP 7-503081 A  (LIMBS & THINGS LTD.),<br>30 March, 1995 (30.03.95),<br>Full text; Figs. 1 to 17<br>& WO 93/14483 A | 1,4 |
| P,X | JP 2003-330358 A  (Toshio FUKUDA et al.),<br>19 November, 2003 (19.11.03),<br>(Family: none) | 1-6 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November, 2004 (30.11.04) | 14 December, 2004 (14.12.04) |

| Name and mailing address of the ISA/<br>  Japanese Patent Office | Authorized officer |
| --- | --- |
| Facsimile No. | Telephone No. |

Form PCT/ISA/210 (second sheet) (January 2004)